# EUROPEAN PATENT APPLICATION

(11) **EP 2 556 775 A1**
(43) Date of publication of application: **13.02.2013**
(21) Application number: 11176809.9
(22) Date of filing: 08.08.2011
(51) Int. Cl.: A47G 7/04, A01G 9/02

(54) **Wall decoration system**

(71) Applicant: Elho International B.V., 5047 RG Tilburg (NL)
(72) Inventor: Kranen, Cornelis, 5047 RG Tilburg (NL)
(74) Representative: Kox, Jordi

(57) **Abstract**

A wall decoration system for decorating a wall, which wall decoration system comprises a wall attachment unit which in use is to be attached to the wall, a plant holder, and a cover which at least partly covers the plant holder.

## Description

The invention relates to a wall decoration system for decorating a wall. It is the object of the invention to provide a new type of wall decoration system.

Said object is achieved by a wall decoration system comprising a wall attachment unit which in use is to be attached to the wall, a plant holder, and a cover which at least partly covers the plant holder, and wherein the plant holder and/or the cover are releasably coupled to the wall attachment unit in order to interconnect the wall attachment unit, plant holder and cover, and the cover comprises a cover opening configured to in use allow a plant held by the plant holder to extend through the cover opening when the wall attachment unit, plant holder and cover are interconnected.

In many house holds there is the wish to have a nice decoration on the walls. In addition to this, there also is the wish to have plants in the room. The wall decoration system according the invention provides the user the possibility to satisfy both wishes in a unique way. The wall decoration system according the invention allows the user to easily attach the wall decoration system to the wall and it provides a unique way wherein the decoration of walls and the presentation of plants are combined. If furthermore allows the use to create may different types of wall decoration, because the wall decoration system can be fully adjusted to wishes of the user.

In an embodiment of the wall decoration system according the invention, the plant holder comprises a holding space for in use holding a ground material for the plant and a holder opening providing access to the holding space, and the holder opening and the cover opening are substantially aligned. The substantially aligned holder opening and cover opening allow a plant held by the plant holder to extend through the cover opening.

In an embodiment of the wall decoration system according the invention, the wall attachment unit comprises a plate like form and the holding opening and the cover opening extend substantially perpendicular to the wall attachment unit.

In an embodiment of the wall decoration system according the invention, the cover comprises a substantially flat cover surface surrounding the cover opening and extending substantially parallel to the wall attachment unit.

In an embodiment of the wall decoration system according the invention, the cover comprises a first cover part extending from the cover surface and towards the wall attachment unit and a second cover part extending from the cover surface and away from the wall attachment unit.

In an embodiment of the wall decoration system according the invention, the first cover part and the second cover part define the cover opening.

The invention further relates to a method for attaching a wall decoration system according to the invention to a wall, said method comprising attaching the wall attachment unit to the wall, placing a plant in the plant holder, placing the plant through the cover opening, and coupling the plant holder and/or the cover to the wall attachment unit in order to interconnect the wall attachment unit, plant holder and cover.

Embodiments of the wall decoration system and the method according the invention will be described by way of example only, with reference to the accompanying schematic drawings in which corresponding reference symbols indicate corresponding parts, and in which:
Figure 1 schematically shows a view in perspective of an embodiment of the wall decoration system according the invention,
Figure 2a schematically shows a front view of the cover of the wall decoration system of fig. 1,
Figure 2b schematically shows a side view of the cover of the wall decoration system of fig. 1,
Figure 2c schematically shows a back view of the cover of the wall decoration system of fig. 1,
Figure 2d schematically shows a view in perspective of the cover of the wall decoration system of fig. 1,
Figure 3a schematically shows a top view of the plant holder of the wall decoration system of fig. 1,
Figure 3b schematically shows a front view of the plant holder of the wall decoration system of fig. 1,
Figure 3c schematically shows a side view of the plant holder of the wall decoration system of fig. 1,
Figure 3d schematically shows a back view of the plant holder of the wall decoration system of fig. 1,
Figure 3f schematically shows a view in perspective of the plant holder of the wall decoration system of fig. 1,
Figure 4a schematically shows a front view of the wall attachment unit of the wall decoration system of fig. 1,
Figure 4b schematically shows a side view of the wall attachment unit of the wall decoration system of fig. 1,
Figure 4c schematically shows a back view of the wall attachment unit of the wall decoration system of fig. 1,
Figure 4d schematically shows a view in perspective of the wall attachment unit of the wall decoration system of fig. 1,
Figure 5 schematically shows a partly exploded view of the wall decoration system of fig. 1,
Figure 6 schematically shows a view in perspective of a further embodiment of the wall decoration system according the invention,
Figure 7a schematically shows a front view of the frame of the wall decoration system of fig. 6,
Figure 7b schematically shows a side view of the frame of the wall decoration system of fig. 6,
Figure 7c schematically shows a back view of the frame of the wall decoration system of fig. 6,
Figure 7d schematically shows a view in perspective of the frame of the wall decoration system of fig. 6,
Figure 8a schematically shows a view in perspective of a further embodiment of the wall decoration system according the invention,
Figure 8b schematically shows a view in perspective of a further embodiment of the wall decoration system according the invention,
Figure 9a schematically shows a front view of the wall attachment unit of the wall decoration systems of fig. 8,
Figure 9b schematically shows a side view of the wall attachment unit of the wall decoration systems of fig. 8,
Figure 9c schematically shows a back view of the wall attachment unit of the wall decoration systems of fig. 8,
Figure 9d schematically shows a view in perspective of the wall attachment unit of the wall decoration systems of fig. 8,
Figure 10a schematically shows a view in perspective of a further embodiment of the wall decoration system according the invention,
Figure 10b schematically shows a view in perspective of a further embodiment of the wall decoration system according the invention,
Figure 11 a schematically shows a front view of the frame of the wall decoration systems of fig. 10,

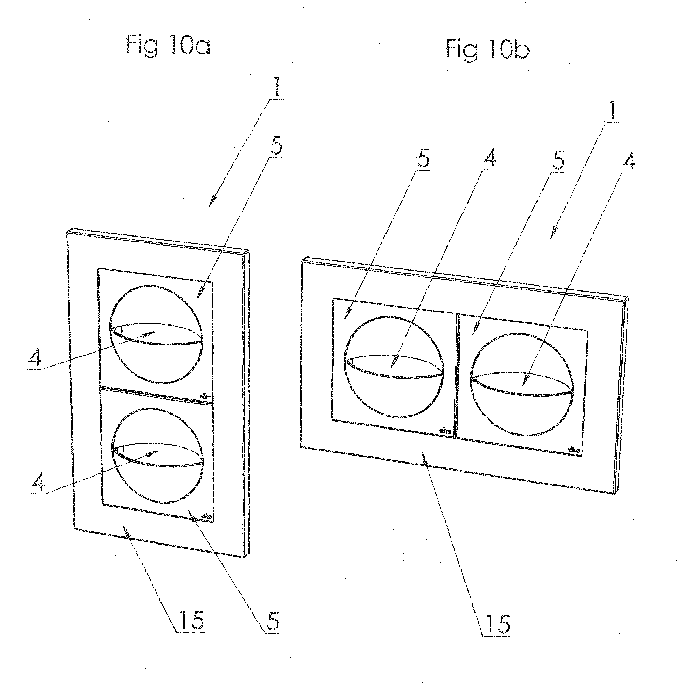

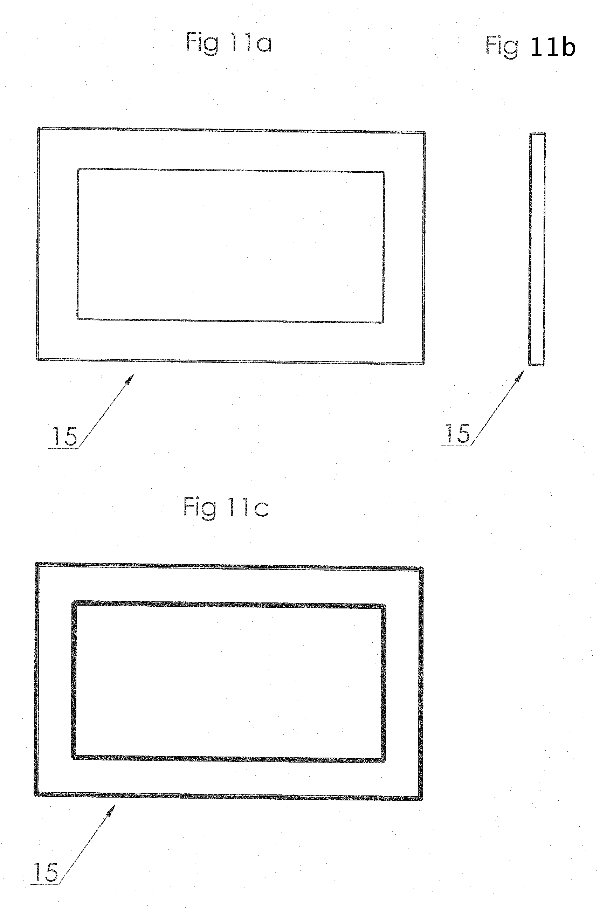

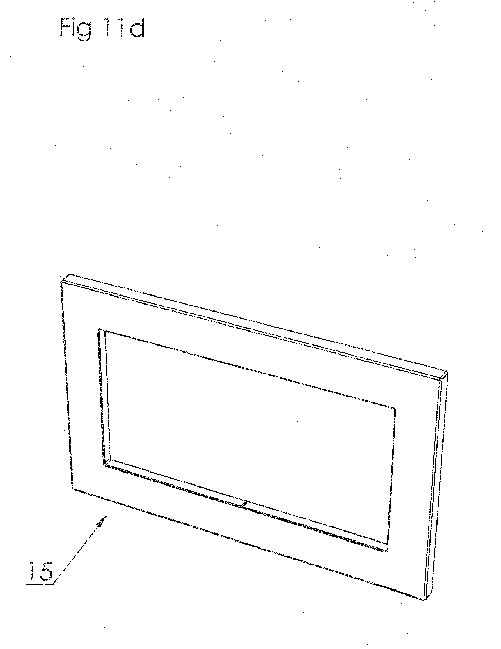

Figure 11 b schematically shows a side view of the frame of the wall decoration systems of fig. 10,
Figure 11c schematically shows a back view of the frame of the wall decoration systems of fig. 10,
Figure 11d schematically shows a view in perspective of the frame of the wall decoration systems of fig. 10,

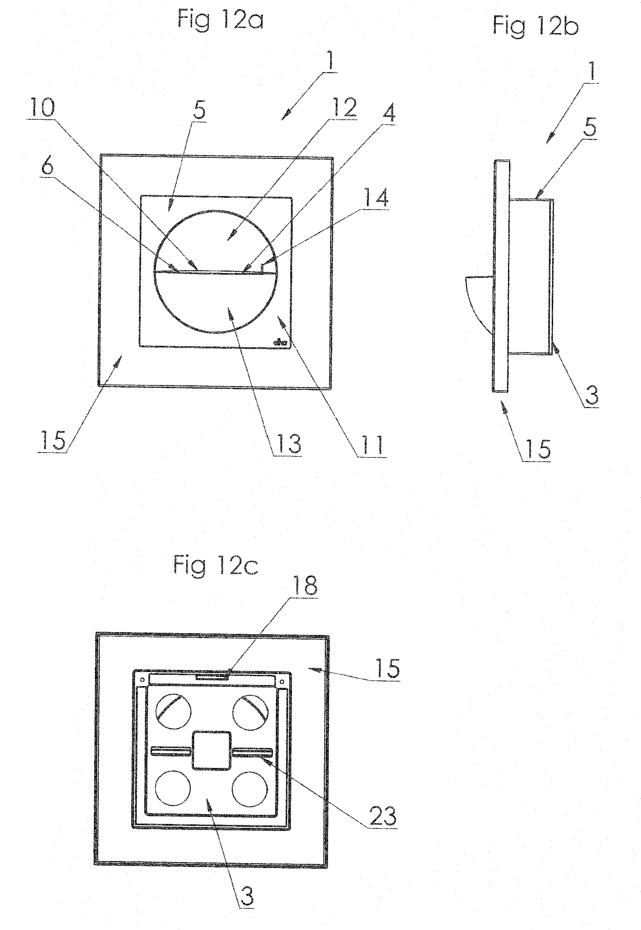

Figure 12a schematically shows a front view of a further embodiment of the wall decoration system according the invention,

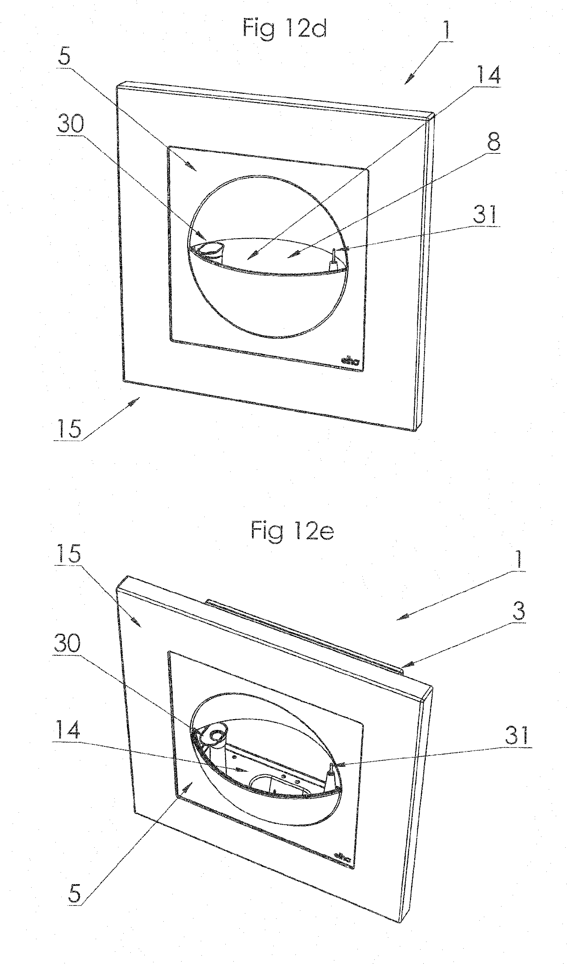

Figure 12b schematically shows a side view of the wall decoration system of fig. 12,
Figure 12c schematically shows a back view of the wall decoration system of fig. 12,
the Figures 12d and e schematically show a view in perspective of the wall decoration system of fig. 12,

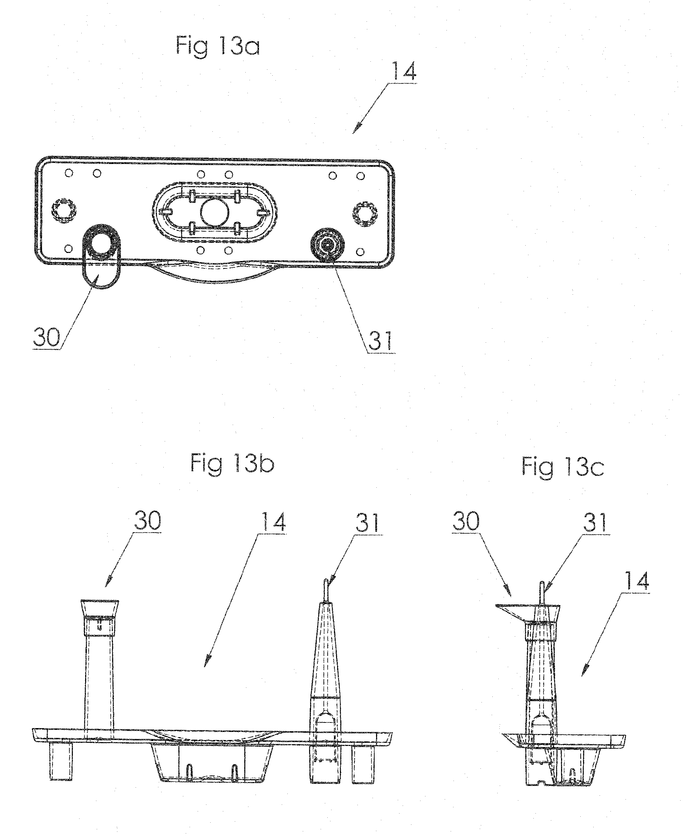

Figure 13a schematically shows a top view of the watering system of the wall decoration system of fig. 12,
Figure 13b schematically shows a front view of the watering system of the wall decoration system of fig. 12,
Figure 13c schematically shows a side view of the watering system of the wall decoration system of fig. 12,

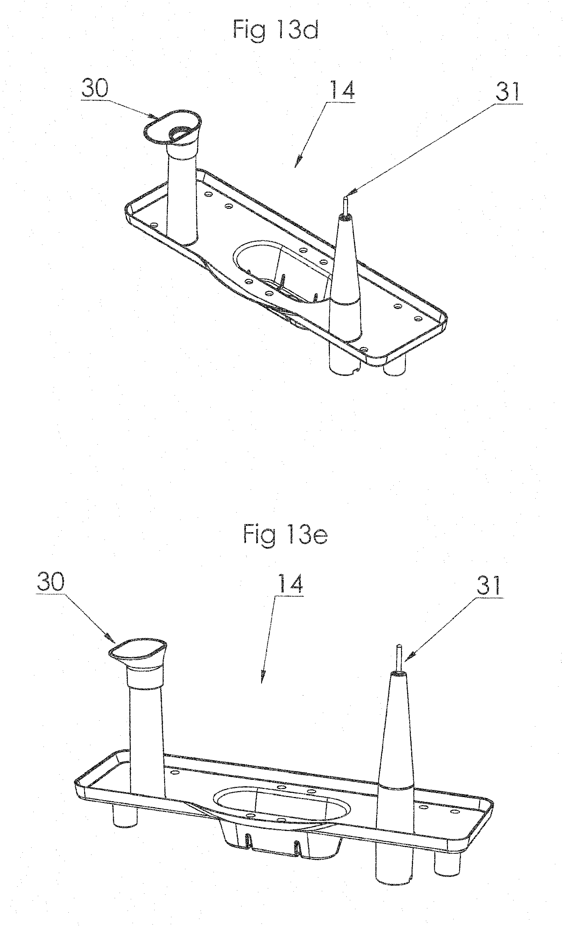

the Figures 13d and e schematically show a view in perspective of the watering system of the wall decoration system of fig. 12,

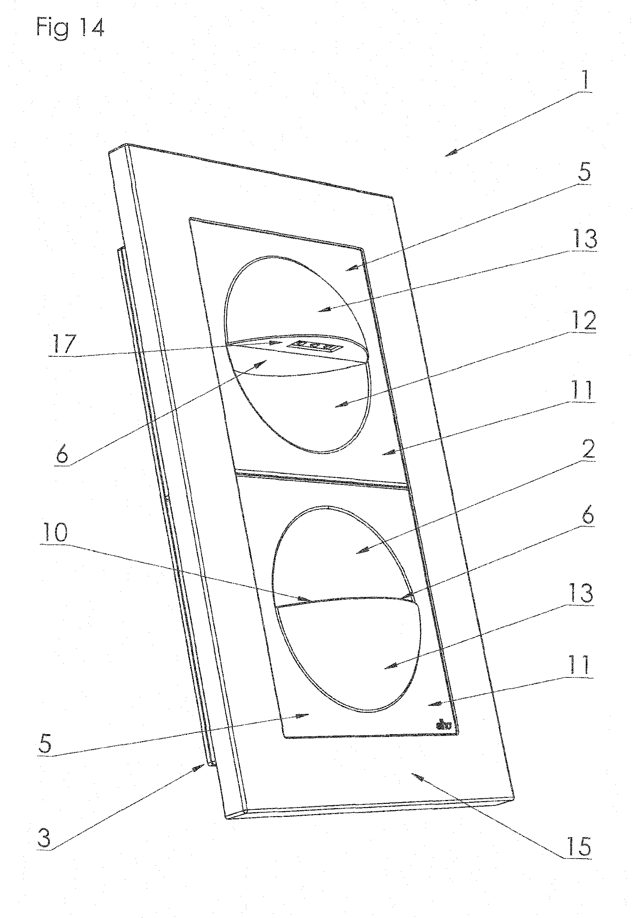

Figure 14 schematically shows a view in perspective of a further embodiment of the wall decoration system according the invention,

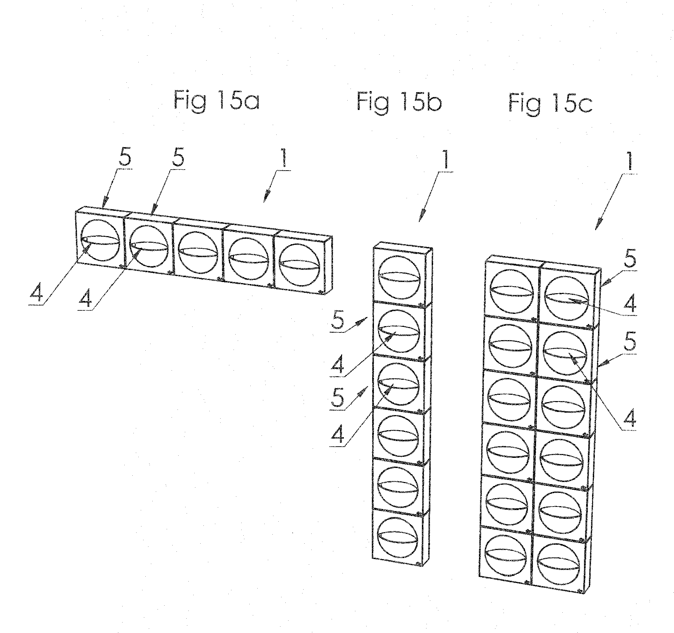

Figure 15a schematically shows a view in perspective of a further embodiment of the wall decoration system according the invention,
Figure 15b schematically shows a view in perspective of a further embodiment of the wall decoration system according the invention,
Figure 15c schematically shows a view in perspective of a further embodiment of the wall decoration system according the invention, and

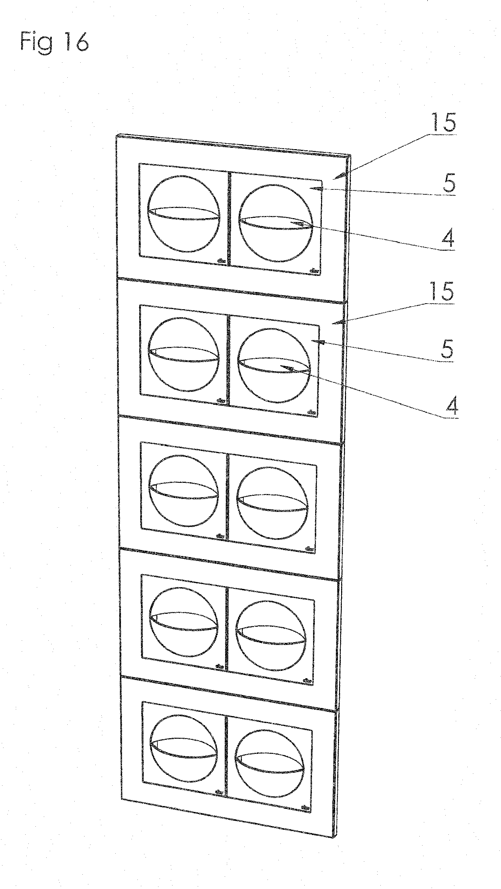

Figure 16 schematically shows a view in perspective of a further embodiment of the wall decoration system according the invention.

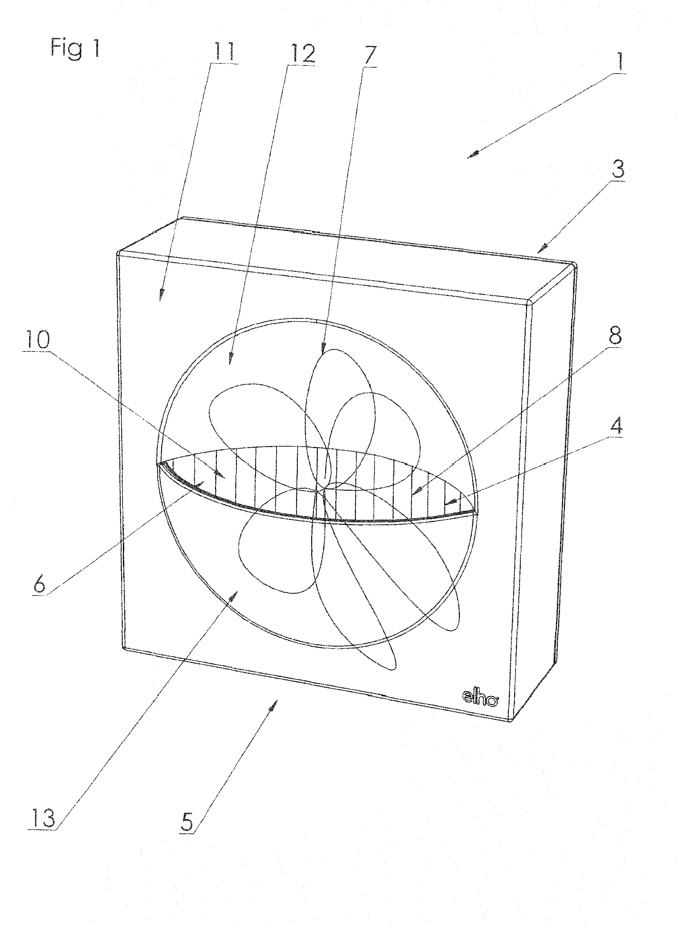

Figure 1 shows an embodiment of the wall decoration system according the invention. The wall decoration system 1 comprises a wall attachment unit 3 which in use is to be attached to a wall, a plant holder 4 for holding a plant 7, and a cover 5 which covers the plant holder 4. The plant holder 4 and the cover 5 are releasably coupled to the wall attachment unit 3 in order to interconnect the wall attachment unit 3, plant holder 4 and cover 5. The cover 5 comprises a cover opening 6 configured to in use allow the plant 7 held by the plant holder 4 to extend through the cover opening 6 when the wall attachment unit 3, plant holder 4 and cover 5 are interconnected. Other configurations of interconnecting the plant holder 4, cover 5 and wall attachment unit 3 are possible. In an alternative embodiment, the plant holder 4 is releasably coupled to the wall attachment unit 3 and the cover 5 is releasably coupled to the plant holder 4. In a further alternative embodiment, the interconnection of the wall attachment unit 3, plant holder 4 and cover 5 is achieved by releasably coupling the cover 5 to the wall attachment unit 3, wherein the plant holder 4 is locked between the wall attachment unit 3 and the cover 5.

The plant holder 4 comprises a holding space 8 for in use holding a ground material for the plant 7 and a holder opening 10 providing access to the holding space 8. The holder opening 10 and the cover opening 6 are substantially aligned. The substantially aligned holder opening 10 and cover opening 6 allows the plant 7 held by the plant holder 4 to extend through the cover opening 6.

The wall attachment unit 3 comprises a plate like form and the holding opening 10 and the cover opening 6 extend substantially perpendicular to the wall attachment unit 3. This prevents, or at least reduces, that a person sitting or standing in a room is able to focus its sight on the ground material located in the plant holder 4 when the wall attachment unit 3 is attached to the wall. This way the person will focus its sight on the plant 7.

The cover 5 comprises a substantially flat cover surface 11 surrounding the cover opening 6 and extending substantially parallel to the wall attachment unit 3. The configuration of the flat cover surface 11 has a positive effect on the way wherein the plant 7 is displayed by the wall decoration system 1 when attached to the wall. The cover 5 comprises a first cover part 12 extending from the cover surface 11 and towards the wall attachment unit 3 and a second cover part 13 extending from the cover surface 11 and away from the wall attachment unit 3. The first cover part 12 and the second cover part 13 define the cover opening 6.

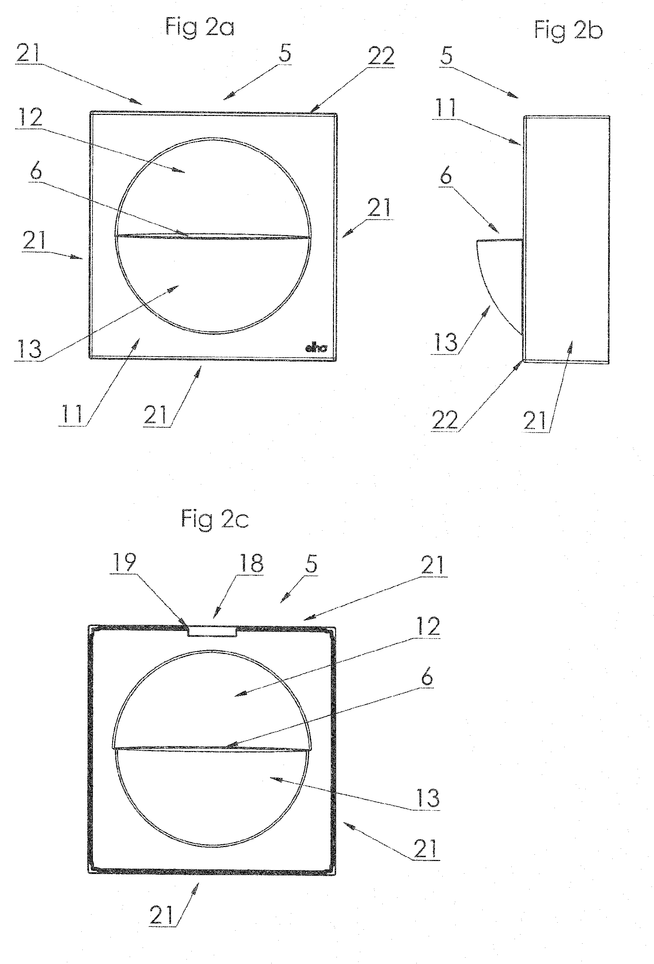

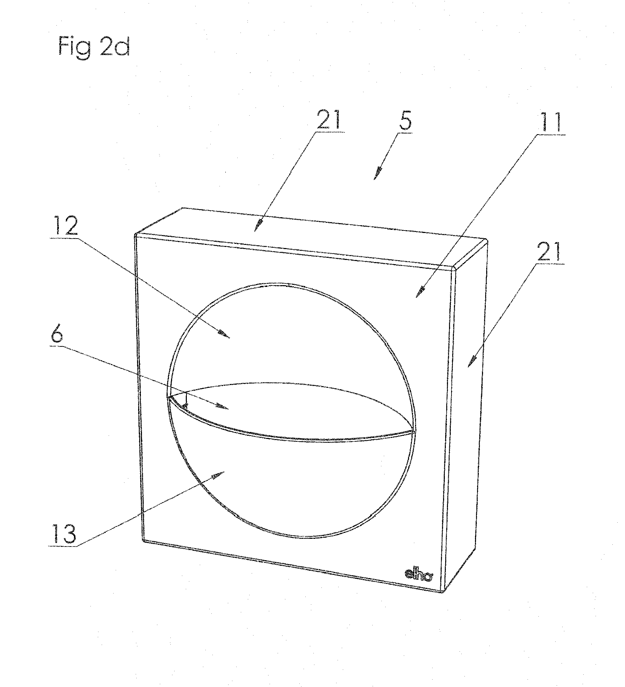

The figures 2a-d show the cover 5 of the wall decoration system 1 of fig. 1. The cover 5 comprises cover side parts 21 extending perpendicular from the circumference 22 of the cover surface 11 and towards the wall attachment unit 3. The cover 5 comprises a first cover coupling member 19 which in use releasably couples with a cooperating second cover coupling member 20 provided on the wall attachment unit 3. The first cover coupling member 19 and the second cover coupling member 20 form together a releasable cover coupling 18.

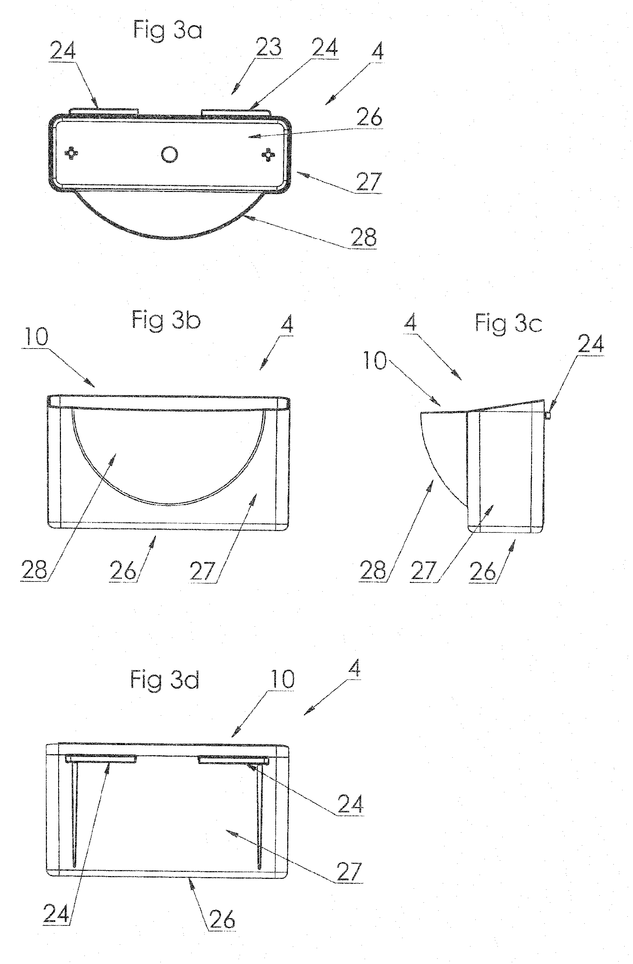

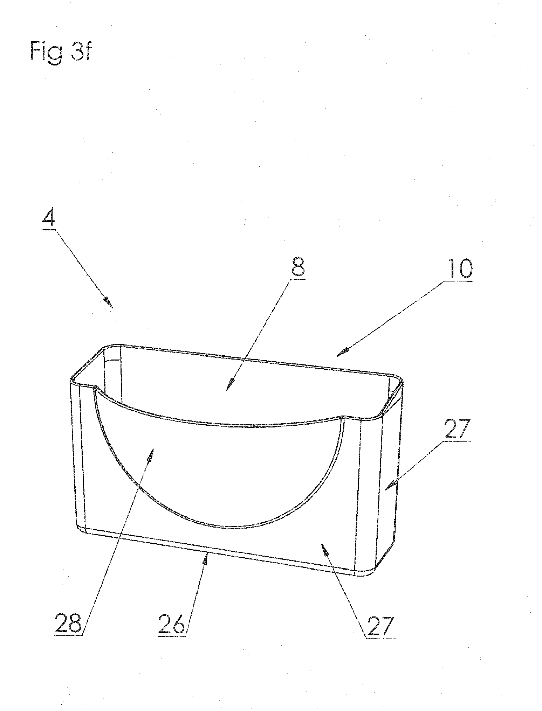

The figures 3a-f show the plant holder 4 of the wall decoration system 1 of fig. 1. The plant holder 4 has a bottom part 26 from which holder side parts 27 upwardly extend to form the holding space 8. One holder side part 27 has an outwardly extending part 28. The form of the outwardly extending part 28 corresponds to the form of the second cover part 13 of the cover 5. The plant holder 4 comprises holding coupling members 24 which in use releasably couple with cooperating second holder coupling members 25 provided on the wall attachment unit 3. The first holder coupling members 24 and the second holder coupling members 25 form together a releasable holder coupling 23.

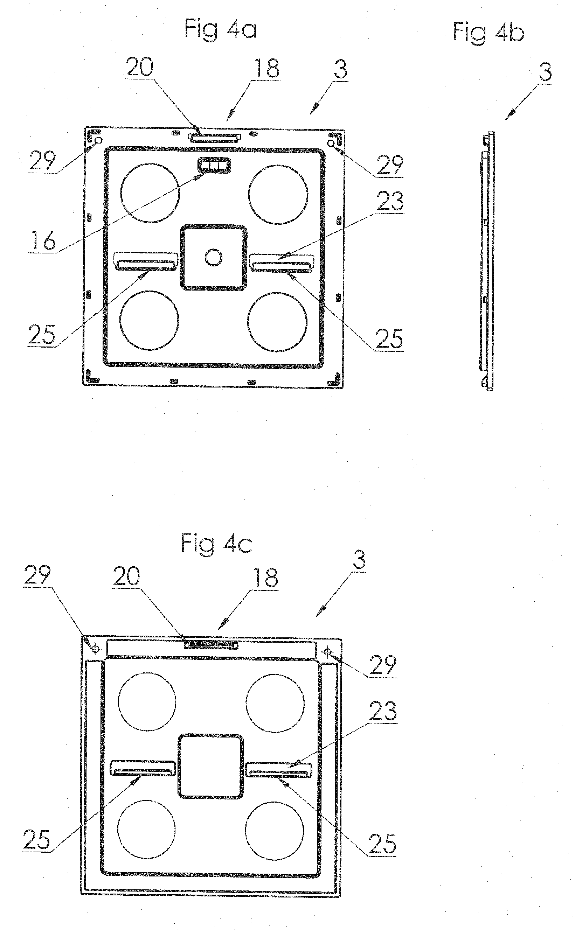

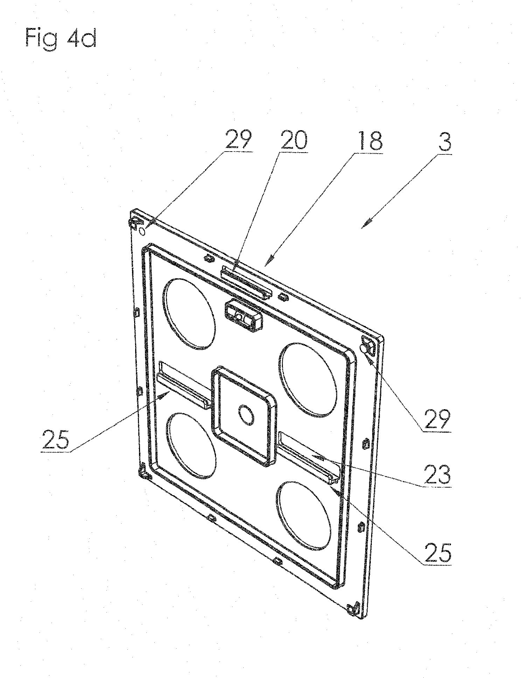

The figures 4a-d show the wall attachment unit 3 of the wall decoration system 1 of fig. 1. The wall attachment unit 3 comprises a second cover coupling member 20 which together with the first cover coupling member 19 of the cover 5 forms the releasable cover coupling 18. Second holder coupling members 25 are provided, which together with the first holder coupling members 24 of the plant holder 4 form the releasable holder coupling 23. The wall attachment unit 3 comprises two attachment openings 29 to attach the wall attachment unit 3 to a wall with for example screws or the like. A spirit level 16 is provided on the wall attachment unit 3 to help the user to place the wall attachment unit 3 in the wished position when attaching it to a wall.

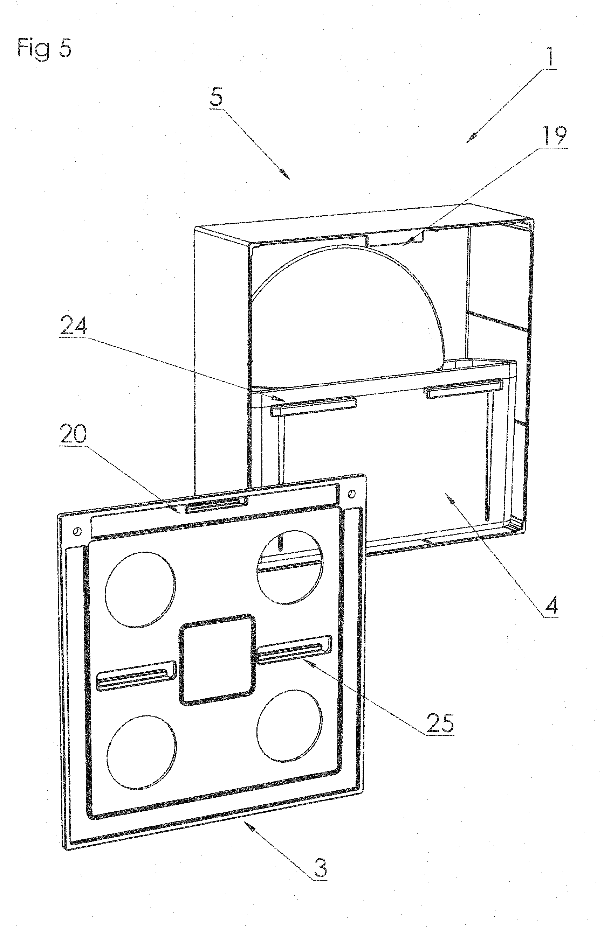

Figure 5 shows the wall decoration system 1 of fig. 1. For attaching the wall decoration system 1 to a wall, the wall attachment unit 3 is attached to the wall. A plant 7 is placed in the plant holder 4. The plant 7 is placed through the cover opening 6, which results in the plant holder 4 and cover 5 being positioned relative to each other as shown in fig. 5. The plant holder 4 and the cover 5 are coupled to the wall attachment unit 3 in order to interconnect the wall attachment unit 3, plant holder 4 and cover 5.

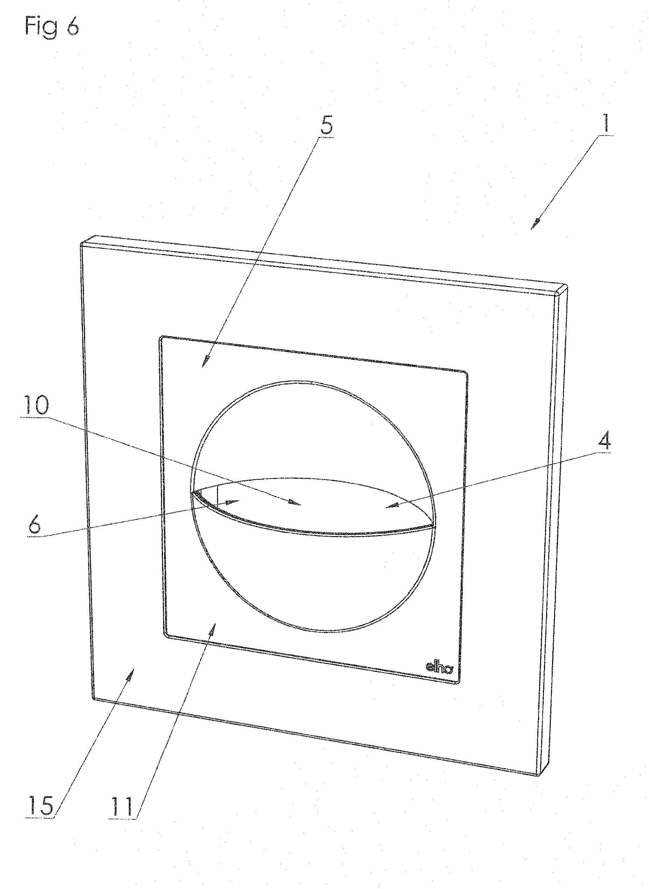

Figure 6 shows a further embodiment of the wall decoration system 1 according the invention. The wall decoration system 1 comprises a frame 15 surrounding the cover 5. The frame 15 surrounds the cover surface 11 and is positioned adjacent thereto.

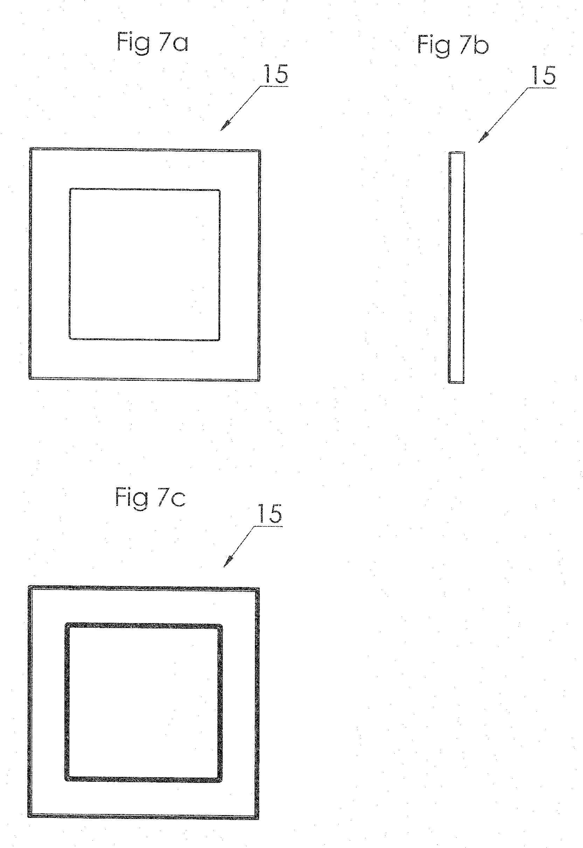

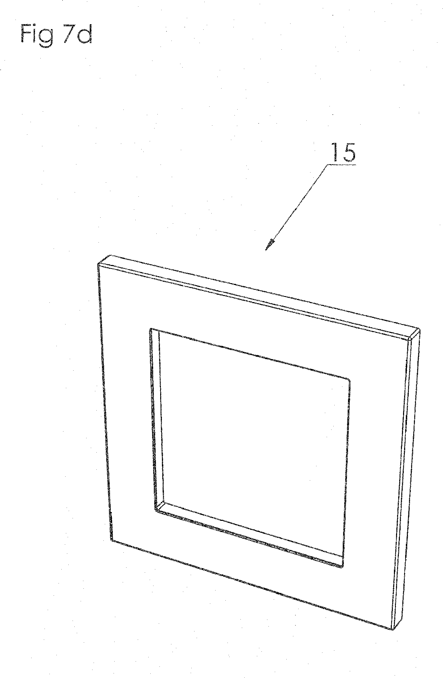

Figure 7a-d shows the frame 15 of the wall decoration system 1 of fig. 6.

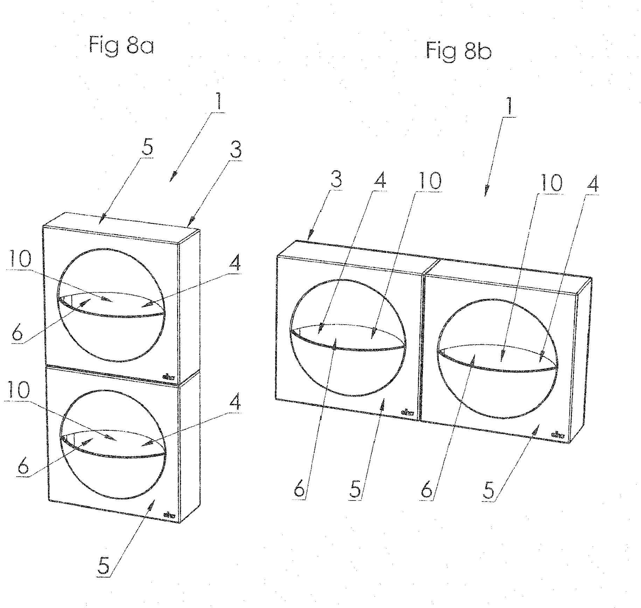

Figure 8a and b each show a further embodiment of the wall decoration system according the invention. In both embodiments the wall decoration system 1 comprises two plant holders 4 and two covers 5 interconnected with a single wall attachment unit 3.

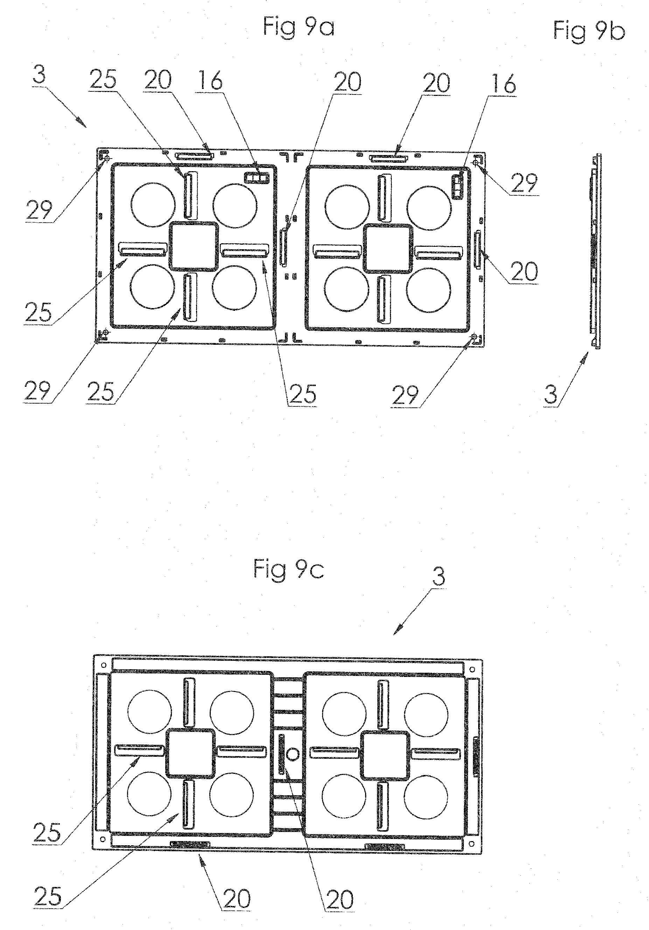

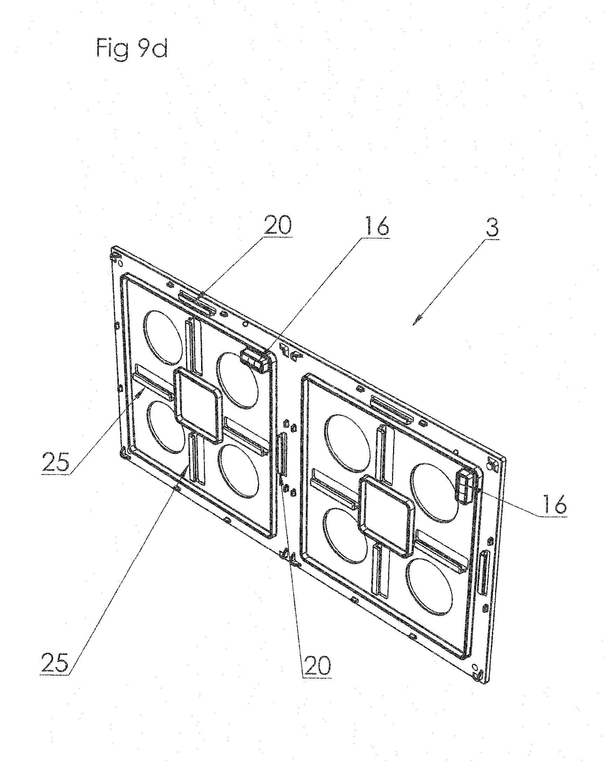

The figure 9a-d show the wall attachment unit 3 of the wall decoration systems 1 of fig. 8. As can be seen in fig. 9, the wall attachment unit 3 comprises horizontal positioned second cover coupling members 20 and second holder coupling members 25 and vertical positioned second cover coupling member 20 and second holder coupling members 25. This way, the wall attachment unit 3 unit can be attached to the wall in a vertical position (as shown in fig. 8a) or in a horizontal position (as shown in fig. 8b). When the wall attachment unit 3 is placed in a vertical position, the plant holders 4 and covers 5 are placed below each other (fig. 8a). When the wall attachment unit 3 is placed in a horizontal position, the plant holders 4 and covers 5 are placed beside each other (fig. 8b). The wall attachment unit 3 comprises horizontal position spirit level 16 for positioning the wall attachment unit 3 in a horizontal position (fig. 8a). The wall attachment unit 3 comprises vertical positioned spirit level 16 for positioning the wall attachment unit 3 in a vertical position (fig. 8b).

Figure 10a and b each show a further embodiment of the wall decoration system according the invention. In both embodiments the wall decoration system 1 comprises a frame 15 surrounding the two covers 5.

The figure 11 a-d show the frame 15 of the wall decoration systems 1 of fig. 10.

The figure 12a-f show a further embodiment of the wall decoration system according the invention. A watering system 14 for feeding water to the plant 7 is provided in the plant holder 4. The watering system 14 is located in the holding space 8 and divides the holding space in two parts (a below part and an upper part). The below part will be filled with water via a water inlet 30. The upper part will be filled with ground material for the plant 7. One can see how much water is held in the below part via a water level indicator 31.

The figure 13a-f show the watering system 14 of the wall decoration system 1 of fig. 12.

Figure 14 shows a further embodiment of the wall decoration system according the invention. The wall decoration system 1 comprises one plant holder 4, two covers 5 and one light unit 17. The light unit 17 is configured to be covered by one of the two covers 5 and to shine through the cover opening 6 thereof. The plant holder 4, light unit 17 and two covers 5 are interconnected with a single wall attachment unit 3. In an alternative embodiment, each of the covers 5 are coupled to a separate wall attachment unit 3. In an alternative embodiment, the wall decoration system 1 does not comprise a frame 15. In the embodiment of fig. 14, the light unit 17 shines on a plant 7 held by the plant holder 4. In an alternative embodiment, the light unit 17 shines in a different direction.

The figure 15a-c show each a further embodiment of the wall decoration system according the invention.

Figure 16 shows a further embodiment of the wall decoration system according the invention.

It will be apparent to those skilled in the art that various modifications can be made to the invention without departing from the scope as defined in the claims.

## Claims

1. Wall decoration system for decorating a wall, which wall decoration system comprises;
- a wall attachment unit which in use is to be attached to the wall,
- a plant holder, and
- a cover which at least partly covers the plant holder, and wherein
-- the plant holder and/or the cover are releasably coupled to the wall attachment unit in order to interconnect the wall attachment unit, plant holder and cover, and
-- the cover comprises a cover opening configured to in use allow a plant held by the plant holder to extend through the cover opening when the wall attachment unit, plant holder and cover are interconnected.

2. Wall decoration system according to claim 1, wherein
- the plant holder comprises a holding space for in use holding a ground material for the plant and a holder opening providing access to the holding space, and
- the holder opening and the cover opening are substantially aligned.

3. Wall decoration system according to claim 2, wherein the wall attachment unit comprises a plate like form and the holding opening and the cover opening extend substantially perpendicular to the wall attachment unit.

4. Wall decoration system according to any of preceding claims, wherein the cover comprises a substantially flat cover surface surrounding the cover opening and extending substantially parallel to the wall attachment unit.

5. Wall decoration system according to claim 4, wherein the cover comprises a first cover part extending from the cover surface and towards the wall attachment unit and a second cover part extending from the cover surface and away from the wall attachment unit.

6. Wall decoration system according to claim 5, wherein the first cover part and the second cover part define the cover opening.

7. Wall decoration system according to any of preceding claims, wherein the plant holder comprises a watering system.

8. Wall decoration system according to any of preceding claims, wherein the wall decoration system comprises a frame surrounding the cover.

9. Wall decoration system according to any of preceding claims, wherein the wall attachment unit comprises a spirit level.

10. Wall decoration system according to any of preceding claims, wherein the wall decoration system comprises a light unit.

11. Wall decoration system according to any of preceding claims, wherein the wall decoration system comprises two plant holders and two covers interconnected with a single wall attachment unit.

12. Wall decoration system according to any of preceding claims, wherein the wall decoration system comprises one plant holder, two covers and one light unit, which light unit is configured to be at least partly covered by one of the two covers and to shine through the cover opening thereof, and wherein the plant holder, light unit and two covers are interconnected with a single wall attachment unit.

13. Wall decoration system according to claim 11 or 12, wherein the wall decoration system comprises a frame surrounding the two covers.

14. Wall decoration system according to any of claims 11-13, wherein the wall attachment unit comprises two spirit levels extending perpendicular towards each other.

15. Method for attaching a wall decoration system decoration according to any of the preceding claims to a wall, said method comprising;
- attaching the wall attachment unit to the wall,
- placing a plant in the plant holder,
- placing the plant through the cover opening, and
- coupling the plant holder and/or the cover to the wall attachment unit in order to interconnect the wall attachment unit, plant holder and cover.
